# EUROPÄISCHE PATENTANMELDUNG

(11) **EP 3 311 937 A1**
(43) Veröffentlichungstag der Anmeldung: **25.04.2018**
(21) Anmeldenummer: 16194972.2
(22) Anmeldetag: 21.10.2016
(51) Int. Cl.: B22D 2/00, B22D 39/06, G01F 23/14

(54) **STEIGROHRANORDNUNG ZUR ERFASSUNG EINES PEGELS EINER METALLSCHMELZE**

(71) Anmelder: StrikoWestofen GmbH, 51643 Gummersbach (DE)
(72) Erfinder: Wiederkehr, Bettina, 51688 Wipperfürth (DE)
(74) Vertreter: Pfenning, Meinig & Partner mbB

(57) **Zusammenfassung**

Die vorliegende Anmeldung betrifft eine Steigrohranordnung (1) zur Erfassung eines Pegels einer Metallschmelze (23). Die vorgeschlagene Steigrohranordnung (1) umfasst ein Steigrohr (2) mit einer Einlassöffnung (3) für Metallschmelze (23) in einem unteren Bereich des Steigrohres (2), einer Auslassöffnung (5) für Metallschmelze (23) in einem oberen Bereich des Steigrohres (2), einer Öffnung (17) in einer Wandung des Steigrohres (2), und eine als länglicher Hohlkörper ausgeführte Gasleitung (8). Ein Innenraum der Gasleitung (8) ist mit einer Gasquelle und einer Druckmessvorrichtung verbindbar. Die Steigrohranordnung (1) weist außerdem einen an einer Außenseite der Wandung des Steigrohres (2) anliegenden Klotz (11) auf. Der Klotz (11) wird von einem durchgehenden und zwischen einem ersten Kanalende und einem zweiten Kanalende verlaufenden Kanal (18) durchlaufen. Das zweite Kanalende mündet in die Öffnung (17) in der Wandung des Steigrohres (2). Außerdem weist die Steigrohranordnung (1) einen Spannring (12) auf, der die Wandung des Steigrohres (2) und den Klotz (11) umgreift und den Klotz (11) zum Abdichten in Richtung des Steigrohres (2) drückt. Die Gasleitung (8) ist derart mit dem Klotz (11) verbunden, dass der Innenraum der Gasleitung (8) in das erste Kanalende mündet.

## Beschreibung

Die vorliegende Anmeldung betrifft eine Steigrohranordnung zur Erfassung eines Pegels einer Metallschmelze gemäß dem Oberbegriff des Anspruchs 1. Die Anmeldung betrifft außerdem ein System mit einer Steigrohranordnung und einen Dosierofen.

Es ist beispielsweise aus der Druckschrift DE 196 47 713 A1 bekannt, in einem Dosierofen ein System zur Erfassung eines Pegels von flüssigem Metall vorzusehen. Hierbei ist in einer Wandung eines Steigrohres des Dosierofens eine Bohrung angeordnet. In diese Bohrung ist ein Ende eines Rohres eingepresst oder eingeklebt. Des Weiteren ist das Rohr mit einer Gasquelle verbunden, durch die ein Gasstrom in Richtung des Endes des Rohres und somit in Richtung von in dem Steigrohr befindlichem flüssigem Metall erzeugt wird. Außerdem ist das Rohr mit einer Druckmessvorrichtung verbunden. Ein Annähern zwischen der Bohrung und eines Pegels des flüssigen Metalls führt zu einer durch die Druckmessvorrichtung messbaren Druckänderung, was ein Erfassen des Pegels der Metallschmelze in dem Steigrohr erlaubt.

Es ist eine Aufgabe der vorliegenden Anmeldung, eine verbesserte Steigrohranordnung vorzuschlagen. Insbesondere ist es eine Aufgabe der vorliegenden Anmeldung, eine Steigrohranordnung vorzuschlagen, die eine Erfassung eines Pegels von flüssigem Metall erlaubt und durch die eine verbesserte Dichtwirkung erzielt wird. Ferner soll eine erhöhte Wirtschaftlichkeit erreicht werden, insbesondere wenn der Dosierofen über einen längeren Zeitraum hinweg betrieben wird. Darüber hinaus ist es eine Aufgabe der Anmeldung, ein entsprechend vorteilhaftes System und einen entsprechend vorteilhaften Dosierofen vorzuschlagen.

Diese Aufgabe wird durch eine Steigrohranordnung mit den Merkmalen des Hauptanspruchs gelöst. Außerdem wird diese Aufgabe durch ein System und einen Dosierofen mit den Merkmalen weiterer Ansprüche gelöst. Vorteilhafte Weiterbildungen ergeben sich mit den Merkmalen der abhängigen Ansprüche und des Ausführungsbeispiels.

Die vorgeschlagene Steigrohranordnung ist geeignet zur Erfassung eines Pegels einer Metallschmelze. Die Steigrohranordnung umfasst ein Steigrohr mit einer Einlassöffnung für Metallschmelze in einem unteren Bereich des Steigrohres, einer Auslassöffnung für Metallschmelze in einem oberen Bereich des Steigrohres, einer Öffnung in einer Wandung des Steigrohres, und eine als länglicher Hohlkörper ausgeführte Gasleitung. Ein Innenraum der Gasleitung ist mit einer Gasquelle und einer Druckmessvorrichtung verbindbar. Die Steigrohranordnung weist außerdem einen an einer Außenseite der Wandung des Steigrohres anliegenden Klotz auf. Der Klotz wird von einem durchgehenden und zwischen einem ersten Kanalende und einem zweiten Kanalende verlaufenden Kanal durchlaufen. Das zweite Kanalende mündet in die Öffnung in der Wandung des Steigrohres. Außerdem weist die Steigrohranordnung einen Spannring auf, der die Wandung des Steigrohres und den Klotz umgreift und den Klotz zum Abdichten in Richtung des Steigrohres drückt. Die Gasleitung ist derart mit dem Klotz verbunden, dass der Innenraum der Gasleitung in das erste Kanalende mündet.

Die Anmeldung betrifft außerdem ein System mit einer wie oben und/oder unten beschriebenen Steigrohranordnung, einer mit dem Innenraum der Gasleitung verbundenen Gasquelle und einer mit dem Innenraum der Gasleitung verbundenen Druckmessvorrichtung. Ferner betrifft die Anmeldung einen Dosierofen zum Dosieren einer Metallschmelze. Der Dosierofen umfasst die wie oben und/oder unten beschriebene Steigrohranordnung.

Durch die Gasquelle, beispielsweise eine Druckluftquelle, kann Gas durch den Innenraum der Gasleitung, den Kanal und die Öffnung in ein Inneres des Steigrohres geblasen werden. Die Strömungsverhältnisse hängen hierbei von einem Pegel der Metallschmelze in dem Inneren des Steigrohres ab, so dass die Druckverhältnisse in dem Inneren der Gasleitung von dem Pegel abhängen. Die Druckverhältnisse können von der Druckmessvorrichtung erfasst werden und erlauben somit Rückschlüsse auf den Pegel der Metallschmelze. Die Druckmessvorrichtung kann zwischen der Gasquelle und der Öffnung angeordnet sein.

Durch die vorgeschlagene Steigrohranordnung wird eine Verbindung erreicht, die auch bei einem Auftreten thermischer Spannungen und thermischer Ausdehnungen infolge eines gegebenenfalls wiederholten Erhitzens und Abkühlens der Steigrohranordnung zuverlässig dicht hält. Auch bei einer Verwendung des Dosierofens über einen längeren Zeitraum hinweg kann hierbei ein Schwinden einer Dichtigkeit - wie es beispielsweise bei in die Öffnung in der Wandung des Steigrohres direkt eingegossenen, eingepressten oder eingeklebten Gasleitungen auftreten kann - verhindert werden. Indem der Klotz an der Außenseite der Wandung des Steigrohres anliegt und indem der Spannring den Klotz zum Abdichten in Richtung des Steigrohres drückt, wird eine dichte Verbindung zwischen einer Dichtfläche des Klotzes und einer Dichtfläche des Steigrohres, die einen Bereich der Außenseite des Steigrohres bildet, erzeugt. Hierbei können im Vergleich zu bekannten Anordnungen vergleichsweise große Dichtflächen erzeugt werden. Zudem ist die Gasleitung dichtend mit dem Klotz verbunden. Zu diesem Zweck kann die Gasleitung beispielsweise eine Gewindeverbindung mit dem Klotz ausbilden. Hierbei weist die Gasleitung beispielsweise ein Außengewinde und der Klotz ein entsprechendes Innengewinde auf. Alternativ oder zusätzlich kann die Gasleitung auch durch eine Wärmeausdehnung bei einer Temperaturerhöhung dichtend mit dem Klotz verbunden werden. Beispielsweise kann hierfür ein Wärmeausdehnungskoeffizient eines unteren Endes der Gasleitung beziehungsweise der Gasleitung größer sein als ein Wärmeausdehnungskoeffizient des Klotzes. Der Wärmeausdehnungskoeffizient ist als Volumen- und/oder Längenausdehnungskoeffizient zu verstehen. Bei temperaturabhängigen Wärmeausdehnungskoeffizienten wird hierbei Bezug zu dem Wert bei Raumtemperatur genommen.

Ein modularer Aufbau der Steigrohranordnung erhöht eine Wirtschaftlichkeit. Durch die vorgeschlagene Steigrohranordnung kann insbesondere ein Materialverbrauch reduziert werden. In der Regel ist das Steigrohr ein Verschleißteil. Der Klotz, der Spannring und/oder die Gasleitung sind in der Regel einfach lösbar mit dem Steigrohr verbunden. Daher kann die Steigrohranordnung auf einfache Weise in Bestandteile zerlegt werden, wodurch eine Wartung des Dosierofens erheblich vereinfacht werden kann. Die einfache Montage und Demontage der Steigrohranordnung kann beispielsweise vorteilhaft sein, wenn ein Austausch einzelner Bestandteile der Steigrohranordnung erforderlich ist. Insbesondere kann es vorgesehen sein, dass nach einem Austausch eines verschlissenen Steigrohres die weiteren Bestandteile der Steigrohranordnung mit einem erneuerten Steigrohr weiterverwendet werden. Darüber hinaus kann die vorgeschlagene Steigrohranordnung Vorteile bringen, wenn eine Reinigung von Bestandteilen der Steigrohranordnung erforderlich ist. Es kann beispielsweise vorkommen, dass die Öffnung in der Wandung des Steigrohres infolge des Betriebs des Dosierofens mit aus der Metallschmelze gebildeten Stoffen verstopft. In diesem Fall erlaubt die vorgeschlagene Steigrohranordnung eine einfache Reinigung der Öffnung, indem der Spannring und der Klotz entfernt werden und die Öffnung anschießend freigestoßen wird. Anschließend kann die Steigrohranordnung in einfacher Weise wieder montiert werden.

In typischen Ausführungen umfasst die Steigrohranordnung einen Flansch, der oberhalb der Öffnung in der Wandung des Steigrohres mit dem Steigrohr verbunden ist. Die Steigrohranordnung kann über den Flansch mit einer Wandung eines Dosierofens verbindbar sein. Typischerweise wird das Steigrohr in eine Öffnung in der Wandung des Dosierofens eingesetzt und anschließend über den Flansch mit der Wandung verbunden. Dadurch kann das Steigrohr auf besonders einfache Weise ausgetauscht werden und eine Wartung der Steigrohranordnung kann zusätzlich vereinfacht werden.

Die Gasleitung wird typischerweise durch den Flansch hindurchgeführt und die Gasquelle und die Druckmessvorrichtung werden typischerweise oberhalb des Flansches mit der Gasleitung verbunden. Die Gasleitung ist beispielsweise ein Rohr. Die Gasleitung kann ein Metall, insbesondere Stahl, enthalten beziehungsweise daraus gefertigt sein. In typischen Ausführungen ist die Gasleitung einstückig ausgebildet.

Zudem kann der Klotz einen größeren Wärmeausdehnungskoeffizienten aufweisen als die Wandung des Steigrohres. Dadurch wird erreicht, dass die Dichtfläche des Klotzes infolge einer Wärmeausdehnung des Klotzes bei einem Erhitzen der Steigrohranordnung zuverlässig gegen die Außenseite der Wandung des Steigrohres gedrückt wird, so dass eine zuverlässige Dichtwirkung gewährleistet ist. Der Klotz kann ein Metall, insbesondere Stahl, und/oder Keramik enthalten beziehungsweise daraus gefertigt sein. In typischen Ausführungen ist der Klotz einstückig ausgebildet. Der Klotz ist typischerweise im Wesentlichen quaderförmig. Eine Vielzahl weiterer Formen ist jedoch ebenso geeignet.

Die Steigrohranordnung ist in typischen Ausführungen derart ausgeführt, dass das Drücken des Spannrings gegen den Klotz selbständig nachjustierbar ist, indem sich der Spannring und/oder ein weiteres Element bei einem Erhitzen der Steigrohranordnung infolge der Erdanziehung und einer Wärmeausdehnung des Spannringes relativ zum Klotz und/oder der Öffnung verschiebt. Auf diese Weise kann eine gute Spannwirkung auch nach mehrfachem Erhitzen und Abkühlen der Steigrohranordnung gewährleistet werden. Infolge des Erhitzens kommt typischerweise der Spannring und/oder das weitere Element niedriger zu liegen. Das weitere Element kann beispielsweise keilförmig sein. Das weitere Element kann zwischen dem Spannring und dem Klotz und/oder zwischen dem Spannring und dem Steigrohr angeordnet sein.

Es kann auch vorgesehen sein, dass der Spannring und der Klotz mit jeweiligen Kontaktflächen aneinander anliegen. Die Kontaktflächen des Spannringes und des Klotzes können derart angeschrägt sein, dass die Kontaktflächen in einem unteren Bereich der Kontaktflächen weiter von einer Mittelachse des Steigrohres entfernt sind als in einem oberen Bereich der Kontaktflächen.

Der Spannring kann in einigen Ausführungen einen größeren Wärmeausdehnungskoeffizienten aufweisen als die Wandung des Steigrohres. Beim Erhitzen der Steigrohranordnung ist dabei eine Ausdehnung des Spannrings größer als eine Ausdehnung des Steigrohres. Beispielsweise kann der Wärmeausdehnungskoeffizient des Spannrings einem Zweifachen, insbesondere einem Fünffachen, eines Wärmeausdehnungskoeffizienten der Wandung des Steigrohres entsprechen. In typischen Ausführungen ist der Spannring aus einem Metall, insbesondere aus Stahl, gefertigt. In typischen Ausführungen ist der Spannring einstückig ausgebildet. Der Spannring bildet typischerweise einen geschlossenen Ring, kann in einigen Ausführungen aber auch teilweise geöffnet sein. Typischerweise ist der Spannring kreisrund. Es kommen aber auch andere Formen in Frage. Beispielsweise kann der Spannring eine im Wesentlichen rechteckige oder quadratische Form aufweisen. Typischerweise liegt der Spannring an der Außenseite der Wandung des Steigrohres, insbesondere auf einer von dem Klotz abgewandten Seite des Steigrohres, an.

Indem die Kontaktflächen des Spannrings und des Klotzes angeschrägt sind, besteht die Möglichkeit, dass der ausgedehnte Spannring bei erhitzter Steigrohranordnung infolge der Erdanziehung nach unten rutscht und an einer niedrigeren Stelle an dem Klotz zu liegen kommt. Auf diese Weise wird eine selbständige Nachjustage der Spannwirkung erreicht, bei der der Spannring die Dichtfläche des Klotzes zuverlässig auch bei wiederholtem Erhitzen und Abkühlen der Steigrohranordnung gegen die Außenseite der Wandung gedrückt wird. Zudem kann durch die angeschrägten Kontaktflächen eine Montage der Steigrohranordnung vereinfacht werden, indem der Spannring bei der Montage von oben über den Klotz gestülpt wird und an diesem zu liegen kommt.

Typischerweise sind die Kontaktflächen des Spannrings und des Klotzes unter einem schwachen Winkel angeschrägt. Die Kontaktflächen können bezogen auf eine Richtung der Mittelachse des Steigrohres um mindestens 0,5 Grad, vorzugsweise um mindestens 1 Grad, und/oder höchstens um 45 Grad, vorzugsweise höchstens um 10 Grad, besonders vorzugsweise um höchstens 5 Grad, angeschrägt sein. Ein typischer Winkel beträgt hierbei 3 Grad.

Es kann in einigen Ausführungen ein Führungsrohr vorgesehen sein. Hierbei kann das zweite Kanalende in ein Inneres des Führungsrohrs münden. In einigen Ausführungen ist das Führungsrohr zumindest teilweise in die Öffnung eingesetzt. Ein Ende des Führungsrohres kann beispielsweise bündig mit einer Innenwand des Steigrohres abschließen oder sogar in den Innenraum des Steigrohres hineinragen. Auch wenn in die Öffnung das Führungsrohr oder ein anderes Element eingesetzt ist, mündet das zweite Kanalende in die Öffnung. Hierbei bildet eine Innenwandung der Öffnung nicht notwendigerweise gleichzeitig eine Wandung eines zwischen dem Innenraum des Steigrohres und der Gasquelle ausgebildeten Strömungskanals. Es kann auch vorgesehen sein, dass die Öffnung in der Wandung und/oder der Kanal auf der Seite der Dichtfläche des Klotzes aufgeweitet ist. In die entsprechende Aufweitung bzw. in die entsprechenden Aufweitungen kann das Führungsrohr eingesetzt sein. Diese Ausführung erlaubt eine besonders einfache Montage der Steigrohranordnung, bei der das Führungsrohr gewährleistet, dass die Öffnung in der Wandung mit dem Kanal fluchtet.

Das Steigrohr weist in der Regel eine gute Temperaturwechselbeständigkeit auf. In typischen Ausführungen ist das Steigrohr ein Keramikrohr. Das Steigrohr kann Aluminiumtitanat umfassen oder aus Aluminiumtitanat gefertigt sein.

Der Dosierofen kann eine mit der Druckmessvorrichtung verbundene Steuereinheit aufweisen. Die Steuereinheit kann eingerichtet sein zum Dosieren des flüssigen Metalls abhängig von einem von der Druckmessvorrichtung gelieferten Drucksignal. Bei einem entsprechenden Verfahren zum Betrieb des Dosierofens wird das flüssige Metall anhand des Drucksignals dosiert.

Die Steuereinheit kann beispielsweise mit einer Pneumatikeinheit verbunden oder verbindbar sein. Die Pneumatikeinheit ist typischerweise eingereichtet, einen Druck im Inneren des Dosierofens zu steuern. Durch dieses Steuern des Drucks kann in an sich bekannter Weise ein Dosieren der Metallschmelze, d.h. eine Kontrolle einer aus der Auslassöffnung tretenden Menge des flüssigen Metalls, erfolgen.

Ein Durchmesser der Öffnung in der Wandung des Steigrohres und/oder des Kanals beträgt in typischen Ausführungen mindestens 0,5 mm und/oder höchstens 5 mm, beispielsweise 2 mm.

Die miteinander in Kontakt stehenden Dichtflächen des Klotzes und des Steigrohres können für eine zuverlässige Dichtwirkung eine geringe Rauhigkeit aufweisen. Es kann beispielsweise vorgesehen sein, dass die Dichtfläche des Klotzes und/oder des Steigrohres eine mittlere Rauheit (*R*ₐ) von höchstens 6 µm, vorzugsweise höchstens 3 µm, beispielsweise 1,6 µm, aufweist.

Ein Ausführungsbeispiel wird nachfolgend anhand der Abbildung beschrieben. Es zeigen
Fig. 1 eine Querschnittsansicht einer Steigrohranordnung,
Fig. 2 eine vergrößerte Ansicht eines Bereichs der Steigrohranordnung,
Fig. 3 eine schematische Ansicht eines Spannrings und eines Klotzes sowie
Fig. 4 einen schematischen Querschnitt durch einen Dosierofen mit der Steigrohranordnung.

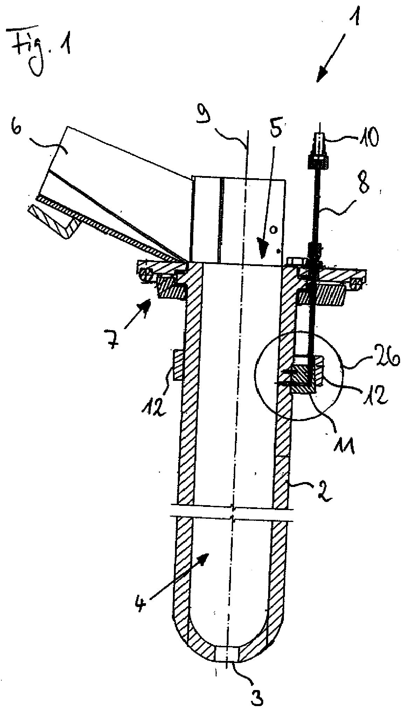

In Fig. 1 ist eine Steigrohranordnung 1 gezeigt. Die Steigrohranordnung 1 umfasst ein Steigrohr 2 und ist eingerichtet, in eine Öffnung an einer Oberseite eines Dosierofens so eingesetzt zu werden, dass ein unteres Ende des Steigrohres 2 in den Dosierofen und in die darin gegebenenfalls befindliche Metallschmelze hineinragt. Das Steigrohr 2 ist in typischen Ausführungen aus Aluminiumtitanat gefertigt.

Das Steigrohr 2 weist an dem unteren Ende eine Einlassöffnung 3 auf. Durch die Einlassöffnung 3 gelangt die Schmelze in ein Inneres 4 des Steigrohres 2. An einem oberen Ende weist das Steigrohr 2 eine Auslassöffnung 5 und eine Auslassrinne 6 auf. Zum Dosieren der Schmelze kann ein Druck im Inneren des Dosierofens erhöht werden, so dass die Schmelze in dem Inneren 4 des Steigrohres 2 aufsteigt und durch die Auslassöffnung 5 tritt und in die Auslassrinne 6 gelangt. Zum Befestigen der Steigrohranordnung 1 an einer Wandung des Dosierofens weist die Steigrohranordnung 1 einen Flansch 7 auf, der eine Wandung des Steigrohres 2 in einem oberen Bereich des Steigrohres 2 ringförmig umläuft und der mit der Wandung des Steigrohres 2 verbunden ist. Der Flansch 7 ist mit der Wandung des Dosierofens verbindbar.

Die Steigrohranordnung 1 weist zudem eine Gasleitung 8 auf. Die Gasleitung 8 ist ein Stahlrohr, das in dem gezeigten Beispiel im Wesentlichen parallel zu einer Mittelachse 9 des Steigrohres 2 ausgerichtet und außerhalb des Steigrohres 2 angeordnet ist. Die Gasleitung 8 durchläuft den Flansch 7 und verbindet somit bei einer Verwendung der Steigrohranordnung 1 in einem Dosierofen das Innere des Dosierofens mit einem Äußeren des Dosierofens. An einem oberen Ende der Gasleitung 8 weist diese einen Anschluss 10 auf zum Anschließen eines Druckmessgerätes und einer Druckluftquelle.

Ein unteres Ende der Gasleitung 8 weist ein Außengewinde auf, das mit einem aus einem Klotz 11 herausgebildeten Innengewinde verschraubt ist. Der Klotz 11 liegt an einer Außenseite der Wandung des Steigrohres 2 an. Der Klotz 11 ist beispielsweise aus Stahl gefertigt. Es kann in einigen Ausführungen vorgesehen sein, dass ein Material des Klotzes 11 einen geringeren Wärmeausdehnungskoeffizienten aufweist als ein Material der Gasleitung 8. Der Klotz 11 und ein Bereich des Steigrohres 2 werden umgriffen von einem Spannring 12, der aus Stahl gefertigt sein kann und der den Klotz 11 in Richtung des Steigrohres 2 drückt. Der Spannring 12 liegt in einem vom Klotz 11 abgewandten Bereich der Wandung des Steigrohres 2 an dem Steigrohr 2 an.

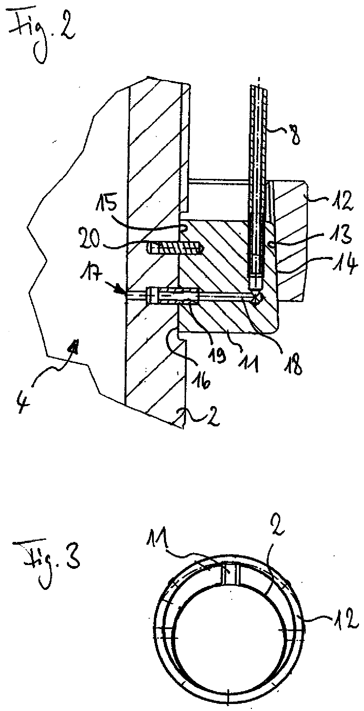

Figur 2 zeigt eine vergrößerte Ansicht eines in Fig. 1 mit dem Bezugszeichen 26 versehenen Bereichs der Steigrohranordnung 1. Wiederkehrende Merkmale sind in dieser und den nachfolgenden Abbildungen mit denselben Bezugszeichen versehen. Der Spannring 12 liegt mit einer Kontaktfläche 13 an einer Kontaktfläche 14 des Klotzes 11 an. Diese Kontaktflächen 13, 14 verlaufen nicht parallel zu der Mittelachse 9 des Steigrohres 2 sondern sind in einem schwachen Winkel angeschrägt, beispielsweise in einem Winkel von 3 Grad.

Der Klotz 11 liegt mit einer Dichtfläche 16 an einer Dichtfläche 15 der Wandung des Steigrohres 2 an. Diese Dichtflächen 15, 16 sind vergleichsweise glatt ausgeführt und weisen beispielsweise jeweils einen Rauhigkeitswert *R*ₐ von 1,6 µm auf.

Das Steigrohr 2 weist in dem Bereich der Dichtfläche 15 eine durchgehende Öffnung 17 auf. Diese Öffnung 17 ist als gestufte Bohrung ausgeführt. Ein dem Inneren 4 des Steigrohres 2 zugewandter Durchmesser der Öffnung 17 beträgt beispielsweise 2 mm, wobei die Öffnung 17 in Richtung des Klotzes 11 verbreitert ist.

Der Klotz 11 weist einen Kanal 18 auf, der mit einem Innenraum der Gasleitung 8 gasleitend verbunden ist. Der Kanal 18 durchläuft den Klotz 11 und mündet in die Öffnung 17 des Steigrohres 2. Somit ist der Innenraum der Gasleitung 8 bis zu dem Anschluss 10 gasleitend mit dem Inneren 4 des Steigrohres 2 verbunden.

Der Kanal 18 ist an einem dem Steigrohr 2 zugwandten Ende verbreitert. In die verbreiterten Bereiche des Kanals 18 und der Öffnung 17 des Steigrohres 2 ist ein Führungsrohr 19 eingesetzt, das beispielsweise aus Stahl gefertigt ist. Zur vereinfachten Montage der Steigrohranordnung 1 ist zusätzlich ein Stift 20 vorgesehen, der in fluchtende Sacklöcher des Klotzes 11 und des Steigrohres 2 eingesetzt ist.

Eine schematische Aufsicht auf den Klotz 11 und den Spannring 12 zeigt Fig. 3. Zusätzlich ist die Außenwand des Steigrohres 2 gezeigt.

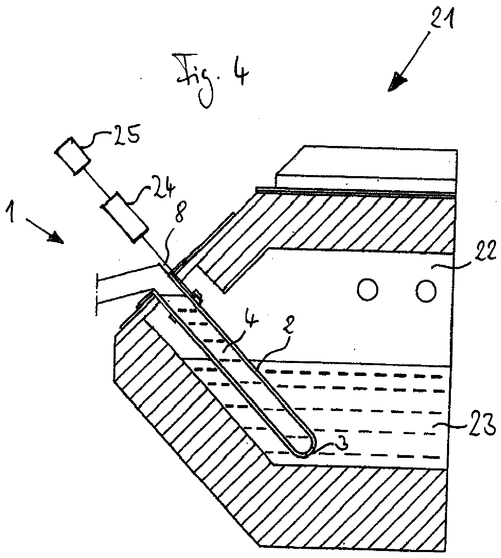

Figur 4 zeigt eine schematische Ansicht der Steigrohranordnung 1 und des Dosierofens 21. In dem dargestellten Beispiel ist das Innere 22 des Dosierofens 21 teilweise mit einer Metallschmellze 23, beispielsweise einer Aluminiumschmelze, gefüllt und mit Druck beaufschlagt. Der Anschluss 10 der Gasleitung 8 ist zur Erfassung eines Pegels der Metallschmelze 23 in dem Steigrohr 2 mit einem Druckmessgerät 24 und einer Gasquelle 25, beispielsweise einer Druckluftquelle, verbunden. Durch die Gasquelle 25 wird ein Gasstrom in Richtung der Öffnung 17 des Steigrohres 2 erzeugt. Das Druckmessgerät 24 erfasst einen Druck im Inneren der Gasleitung 8. Dieser ist abhängig von dem Pegel der Metallschmelze 23. Wenn die Metallschmelze 23 beispielsweise die Öffnung 17 bedeckt, wird in der Regel ein Druckanstieg durch das Druckmessgerät 24 erfasst.

Das Druckmessgerät 24 ist zusätzlich mit einer nicht dargestellten Steuereinheit, die typischerweise einen Mikroprozessor umfasst, verbunden. Das Druckmessgerät 24 gibt ein durch das Druckmessgerät 24 ermitteltes Drucksignal an die Steuereinheit aus. Die Steuereinheit ist eingerichtet, den Druck im Inneren 22 des Dosierofens 21 abhängig von dem von dem Druckmessgerät 24 empfangenen Drucksignal zu steuern. Auf diese Weise kann die Menge einer aus der Auslassöffnung 5 tretenden Metallschmelze und somit ein Dosieren der Metallschmelze reguliert werden.

Lediglich in den Ausführungsbeispielen offenbarte Merkmale der verschiedenen Ausführungsformen können miteinander kombiniert und einzeln beansprucht werden.

## Patentansprüche

1. Steigrohranordnung (1) zur Erfassung eines Pegels einer Metallschmelze (23), umfassend
ein Steigrohr (2) mit einer Einlassöffnung (3) für Metallschmelze (23) in einem unteren Bereich des Steigrohres (2), einer Auslassöffnung (5) für Metallschmelze (23) in einem oberen Bereich des Steigrohres (2), einer Öffnung (17) in einer Wandung des Steigrohres (2), und eine als länglicher Hohlkörper ausgeführte Gasleitung (8), wobei ein Innenraum der Gasleitung (8) mit einer Gasquelle (25) und einer Druckmessvorrichtung (24) verbindbar ist,
**gekennzeichnet durch**
einen an einer Außenseite der Wandung des Steigrohres (2) anliegenden Klotz (11), wobei der Klotz (11) von einem durchgehenden und zwischen einem ersten Kanalende und einem zweiten Kanalende verlaufenden Kanal (18) durchlaufen wird, wobei das zweite Kanalende in die Öffnung (17) in der Wandung des Steigrohres (2) mündet,
und einen Spannring (12), der die Wandung des Steigrohres (2) und den Klotz (11) umgreift und den Klotz (11) zum Abdichten in Richtung des Steigrohres (2) drückt,
wobei die Gasleitung (8) derart mit dem Klotz (11) verbunden ist, dass der Innenraum der Gasleitung (8) in das erste Kanalende mündet.

2. Steigrohranordnung (1) nach Anspruch 1, **gekennzeichnet durch** einen Flansch (7), der oberhalb der Öffnung (17) in der Wandung des Steigrohres (2) mit dem Steigrohr (2) verbunden ist und über den die Steigrohranordnung (1) mit einer Wandung eines Dosierofens (21) verbindbar ist.

3. Steigrohranordnung (1) nach einem der Ansprüche 1 oder 2, **dadurch gekennzeichnet, dass** der Spannring (12) einen größeren Wärmeausdehnungskoeffizienten aufweist als die Wandung des Steigrohres (2).

4. Steigrohranordnung (1) nach einem der Ansprüche 1 bis 3, **dadurch gekennzeichnet, dass** der Klotz (11) einen größeren Wärmeausdehnungskoeffizienten aufweist als die Wandung des Steigrohres (2).

5. Steigrohranordnung (1) nach einem der Ansprüche 1 bis 4, **dadurch gekennzeichnet, dass** das Drücken des Spannrings (12) gegen den Klotz (11) selbständig nachjustierbar ist, indem sich der Spannring (12) und/oder ein weiteres Element bei einem Erhitzen der Steigrohranordnung (1) infolge der Erdanziehung und einer Wärmeausdehnung des Spannringes relativ zum Klotz (11) und/oder der Öffnung (17) verschiebt.

6. Steigrohranordnung (1) nach einem der Ansprüche 1 bis 5, **dadurch gekennzeichnet, dass** der Spannring (12) und der Klotz (11) mit jeweiligen Kontaktflächen (13, 14) aneinander anliegen, wobei die Kontaktflächen (13, 14) des Spannringes (12) und des Klotzes (11) derart angeschrägt sind, dass die Kontaktflächen (13, 14) in einem unteren Bereich der Kontaktflächen (13, 14) weiter von einer Mittelachse (9) des Steigrohres (2) entfernt sind als in einem oberen Bereich der Kontaktflächen (13, 14).

7. Steigrohranordnung (1) nach Anspruch 6, **dadurch gekennzeichnet, dass** die Kontaktflächen (13, 14) bezogen auf eine Richtung der Mittelachse (9) des Steigrohres (2) um mindestens 0,5 Grad, vorzugsweise um mindestens 1 Grad, und/oder höchstens um 45 Grad, vorzugsweise höchstens um 10 Grad, angeschrägt sind.

8. Steigrohranordnung (1) nach einem der Ansprüche 1 bis 7, **gekennzeichnet durch** ein Führungsrohr (19), wobei das zweite Kanalende in ein Inneres des Führungsrohrs (19) mündet.

9. Steigrohranordnung (1) nach einem der Ansprüche 1 bis 8, **dadurch gekennzeichnet, dass** das Steigrohr (2) ein Keramikrohr, insbesondere Aluminiumtitanat umfassend, ist.

10. Steigrohranordnung (1) nach einem der Ansprüche 1 bis 9, **dadurch gekennzeichnet, dass** der Klotz (11) ein Metall, insbesondere Stahl, und/oder Keramik enthält beziehungsweise daraus gefertigt ist.

11. Steigrohranordnung (1) nach einem der Ansprüche 1 bis 10, **dadurch gekennzeichnet, dass** der Spannring (12) aus einem Metall, insbesondere aus Stahl, gefertigt ist.

12. System mit einer Steigrohranordnung (1) nach einem der vorangehenden Ansprüche, einer mit dem Innenraum der Gasleitung (8) verbundenen Gasquelle (25) und einer mit dem Innenraum der Gasleitung (8) verbundenen Druckmessvorrichtung (24).

13. Dosierofen (21) zum Dosieren einer Metallschmelze (23), umfassend eine Steigrohranordnung (1) nach einem der Ansprüche 1 bis 11 oder ein System nach Anspruch 12.

14. Dosierofen (21) zum Dosieren einer Metallschmelze (23), **gekennzeichnet durch** ein System nach Anspruch 12 und eine mit der Druckmessvorrichtung (24) verbundene Steuereinheit, die eingerichtet ist zum Dosieren des flüssigen Metalls abhängig von einem von der Druckmessvorrichtung (24) gelieferten Drucksignal.
